# EUROPEAN PATENT APPLICATION

(11) **EP 1 908 730 A1**
(43) Date of publication of application: **09.04.2008**
(21) Application number: 06020910.3
(22) Date of filing: 05.10.2006
(51) Int. Cl.: C01G 23/047, C01G 23/07, B01J 35/00

(54) **Nitrogen doped titanium oxide nanoparticles**

(71) Applicant: EMPA Eidgenössische Materialprüfungs- und Forschungsanstalt, CH-8600 Dübendorf (CH)
(72) Inventor: Graule, Thomas Josef, 8200 Schaffhausen (CH); Vital , Andri, 8032 Zürich (CH); Akurati, Kranthi Kumar, 8600 Dübendorf (CH); Fortunato, Giuseppino, 9000 St. Gallen (CH); Reifler, Felix A., 9008 St. Gallen (CH); Ritter, Axel, 9000 St. Gallen (CH)
(74) Representative: Felder, Peter

(57) **Abstract**

A method for producing nitrogen doped titanium oxide nanoparticles with the formula TiO₂₋ₓNₓ, wherein x is in the range from 0.0005 to 0.05, comprises reacting gaseous precursor compounds in a hot wall reaction vessel. Said precursor compounds comprise a gaseous titanium compound and at least one selected from a gaseous oxygen compound and a gaseous nitrogen compound.

## Description

### Technical Field of the Invention

The present invention relates to a method for producing nitrogen doped titanium oxide nanoparticles according to the preamble of claim 1. Moreover, the invention relates to nitrogen doped titanium oxide nanoparticles according to the preamble of claim 7, and to a uses thereof according to claims 9 and 10.

### Background of the Invention

Photocatalytic oxidation provides a unique opportunity to combat the tremendous set of environmental problems related to the degradation of hazardous organic wastes, purification of contaminated ground water and the control of toxic air contaminants. The rate of oxidation is significant even at ambient temperature and very low concentration of contaminants. Although a few studies have explored the photocatalytic activity of other semiconductors such as SnO₂, ZnO, Nb₂O₅, CeO₂, SrTiO₃, CdS, HgS, ZnS, CdSe, Ga₂S₃ and CdTe, the preponderance of work has focused on TiO₂ due to its suitable thermodynamic positions of valence and conduction band edges for redox reactions, long term stability, low cost, non-toxicity, resistance to photo and chemical corrosion.

For the excitation of the band gap of a semiconductor, the energy of the electromagnetic radiation should exceed or be equal to the band gap energy of the given semiconductor. Given the case of anatase phase of TiO₂, whose band gap energy is 3.2 eV, the minimum energy of the electromagnetic radiation necessary to excite the band gap corresponds to the wavelength of 387.5 nm. So, from the above discussion it can be said that electromagnetic radiation with a wavelength of 387.5 nm or less is required to excite the band gap of anatase TiO₂.

The development of a practical photocatalytic system focuses on the cost effectiveness of the process. The use of expensive solar concentrators and artificial UV irradiation for photocatalytic reactions has a negative influence on the cost effectiveness. Accordingly, a more practical and inexpensive approach is to employ renewable solar energy as the illumination source to activate TiO₂ for photocatalytic decomposition reactions. In addition to the improved cost effectiveness resulting from the use of solar energy, the abundance of visible light (55 % as compared to 6 % for UV) is a motivation to synthesize TiO₂ nanoparticles that absorb visible light.

TiO₂ photocatalysts with absorbtion in the visible range have been realized by doping with transition metals such as Fe, Cr, V, Mn, Cu, Co, Nb, Zn etc. By doping with transition metal cations having lower, equal and higher valence than the Ti (parent) ion, intermediate energy levels can be formed within the band gap of the TiO₂. Metal doped TiO₂ shows the desirable red shift in the band gap transition accompanied by a transfer of the charge between the metal ion d electrons and the TiO₂ conduction or valence band.

Although metal doped TiO₂ shows significant absorption in the visible light region, certain prerequisites have to be met in order to achieve an improvement of photocatalytic activity. Some general conclusions from numerous investigations carried out so far are the following:
1. Metal ion doped TiO₂ suffers from thermal instability.
2. The competition between recombination of the photogenerated charge carriers and detrapping requires precisely controlled synthesis process.
3. The metal ion implantation method which is used to produce most of the metal ion doped TiO₂ is very expensive.
4. The resultant visible light active photocatalysts are less viable for commercialization.

The use of reduced TiO₂ presents a relatively simple and less expensive method to produce a visible light active photocatalyst. A simple reduction of TiO₂ either in vacuum, H₂ or any other reducing atmosphere creates O₂ vacancies in the TiO₂ lattice which makes the resultant material absorb light in the visible region. Absorption of visible light is facilitated by electron excitation from the valence band to one of the oxygen vacancy sites located at either 2.02 or 2.45 eV instead of the energy barrier of 3.2 eV that is characteristic of pure TiO₂. However, the potential of the electron excited to the oxygen vacancy states in reduced TiO₂ exceeds the reduction potential of water. This makes the reduction of photogenerated electrons in reduced TiO₂ energetically unfavorable. Moreover, the mobility of the electron trapped in the oxygen vacancy states is low because of localization leading to recombination with the photogenerated hole. Based on the above thermodynamic considerations it can be stated that although reduction of TiO₂ shifts the photoabsorption behavior into the visible region, the resultant photocatalytic activity is poor.

Anionic species doping of TiO₂ has attracted much attention in recent years as a way of inducing visible light activity. Doping with anionic species overcomes the disadvantages of the above mentioned approaches of metal ion doping and reduced TiO₂ and allows synthesis of TiO₂ with improved photocatalytic activity combined with visible light absorption. However, the concentration and nature of the anionic dopant species needs to be properly selected for better performance of the visible light active photocatalysts. Doped anionic species should satisfy the following criteria:
1. The anionic dopant should produce states within the band gap so as to reduce the energy barrier of the photoexcited electron.
2. The photogenerated hole in TiO₂ has sufficient over-potential to perform the intended photo-oxidation reaction, i.e. the oxidation of water. The potential of the photogenerated electron excited to the conduction band or to the conduction band minimum should straddle the reduction potential of water i.e. E(H⁺/H₂). This condition is necessary to separate the electron from the hole so as to ensure photoreduction activity.
3. States within the band gap should not form too far away from the bottom of the conduction or the top of the valence band. Instead, the states should overlap with the band states of TiO₂ i.e. either with the Ti 3d orbitals of the conduction band or the O 2p orbitals of the valence band. In the latter case, the photogenerated charge carriers will have sufficient life time to undergo charge transfer reactions at the photocatalyst surface.

Table 1 summarizes the ability of anionic species to satisfy the above three criteria. From the table it is clear that doping TiO₂ with either N or S is beneficial for the synthesis of visible light photocatalysts.

**Table 1: Essential requirements for inducing visible light photocatalytic activity**

| Requirements | Metal ion doped | Reduced TiO₂ | Anionic species | | | |
|---|---|---|---|---|---|---|
| | | | N | C | S | P |
| Doping should produce states in the bandgap of TiO₂ | √ | √ | √ | √ | √ | √ |
| CBM should be higher H₂/H₂O level | x | x | √ | √ | √ | √ |
| States in band gap should overlap with the band states of TiO₂ | √ | x | √ | x | √ | x |

| | | | | | | |
|---|---|---|---|---|---|---|
| √ requirement is fulfilled; x requirement is not fulfilled | | | | | | |

The ionic radius of nitrogen is substantially smaller than that of sulfur, and for this reason it is much easier to dope nitrogen in the oxygen site as compared to sulfur. The energy required for the substitution of nitrogen and sulfur in the lattice of TiO₂ was reported to be 1.6 eV and 4.1 eV respectively. Although the visible light photocatalytic activity can be improved by doping of either with nitrogen or sulfur, it is preferred to use nitrogen as the doping agent because of energy considerations.

Synthesis of nitrogen doped TiO₂ (henceforth designated as "N-doped TiO₂") and its significance have been studied extensively (see e.g. US 2002/0169076 A1), but the process routes comprise multiple steps. Synthesis routes capable of producing nitrogen TiO₂ in a single-step involve the use of ion implantation and plasma technology, which however have the disadvantage of high production costs (see e.g. US 2002/0006865 A1).

### Summary of the Invention

It is an object of the present invention to provide an improved method for producing N-doped titanium oxide nanoparticles having photocatalytic activity under visible light irradiation.

The foregoing and further objects are achieved by the method defined in claim 1 and by the nanoparticles defined in claim 7.

According to one aspect of the invention, a method for producing nitrogen doped titanium oxide nanoparticles with the formula TiO₂₋ₓNₓ, wherein x is in the range from 0.0005 to 0.05, comprises reacting gaseous precursor compounds in a hot wall reaction vessel, said precursor compounds comprising a gaseous titanium compound and at least one selected from a gaseous oxygen compound and a gaseous nitrogen compound. It shall be understood that in the present application x refers to the stoichiometric fraction of nitrogen in the lattice. The claimed value of x from 0.0005 to 0.05 corresponds to 0.05 to 5 atomic %, henceforth denoted as at %. By means of the method of this invention, the requisite compound is produced in a single-step by employing a process that involves less operating costs than the methods known from prior art.

According to another aspect of the invention, there are provided nitrogen doped titanium oxide nanoparticles with the formula TiO₂₋ₓNₓ, wherein x is in the range from 0.0005 to 0.05, having a specific surface area of 55 to 96 m²/g. These particles absorb light in the visible part of the spectrum and can decompose virtually any organic species.

Therefore, according to a further aspect of the invention, the nitrogen doped titanium oxide nanoparticles are used for photocatalyzing decomposition of organic compounds or microorganisms. According to yet another aspect of the invention, the nitrogen doped titanium oxide nanoparticles are used for photocatalytic solar energy conversion, e.g. for splitting of water in solar cells so as to produce hydrogen.

Advantageous embodiments are defined in the dependent claims.

The selection of suitable reagents, i.e. precursor compounds, is important. Titanium halides, particularly TiCl₄, are advantageous because they do not contain a Ti-O bond and have a comparatively low activation energy barrier for the substitution of nitrogen. In addition, these compounds have a high vapor pressure and thus are easily brought into the gas phase for introduction into the hot wall reaction vessel.

In order to achieve controlled oxidation of the TiCl₄ precursor, water vapor is preferable instead of an oxygen/air mixture because this allows reducing the operating temperature of the process.

The photocatalyst according to this invention is in powder form and the content of nitrogen dopant, the particle morphology, the size and the concomitant specific surface area can be influenced by adjusting the relative flow rates of the reactants (notably: NH₃, water vapor, TiCl₄) and the temperature of the hot-wall reactor.

### Brief description of the drawings

The above mentioned and other features and objects of this invention and the manner of achieving them will become more apparent and this invention itself will be better understood by reference to the following description of various embodiments of this invention taken in conjunction with the accompanying drawings, wherein:
- Fig. 1: shows an apparatus with hot-wall reactor for single-step synthesis of N-doped TiO₂ nanoparticles;
- Fig. 2: shows XRD patterns of the N-doped TiO₂ powder: a) doped with 0.2 at% nitrogen, exhibiting pure anatase phase; and b) doped with 2.4 at% nitrogen, showing titanium oxynitride phase; the symbols * and + indicating the anatase phase of TiO₂ and the Ti-oxynitride phase, respectively;
- Fig. 3: shows TEM micrographs of the N-doped TiO₂ nanoparticles synthesized with increasing NH₃ flow rates: (a) homogeneous particle morphology; and (b) particles with hollow morphology synthesized at 3 times higher NH₃ flow rate than that used to produce particles in (a);
- Fig. 4: shows a deconvoluted N 1 s XPS spectrum of the N-doped TiO₂ particles, wherein the as-measured spectrum without deconvolution shows the broad peak at 400 eV and wherein the deconvoluted N 1 s XPS spectrum of the same sample reveals a peak at 402 eV; the peak at 396.5 eV evidences the presence of doped nitrogen content;
- Fig. 5: shows a comparison of the optical properties of the pure and N-doped TiO₂ powders: a) Degussa P25 TiO₂ powder absorbs light in the UV (Ultraviolet) range; (b) absorption shifts to visible light region after doping with nitrogen - 0.13 at% and (c) 1.7 at%;
- Fig. 6: shows: a) the degradation performance of pure and doped TiO₂ powders towards the synthetic human odors - sweatacid and nicotine; b) shows a comparison of the photocatalytic activity of TiO₂ powders doped with various amounts of nitrogen.

### Detailed description of the invention

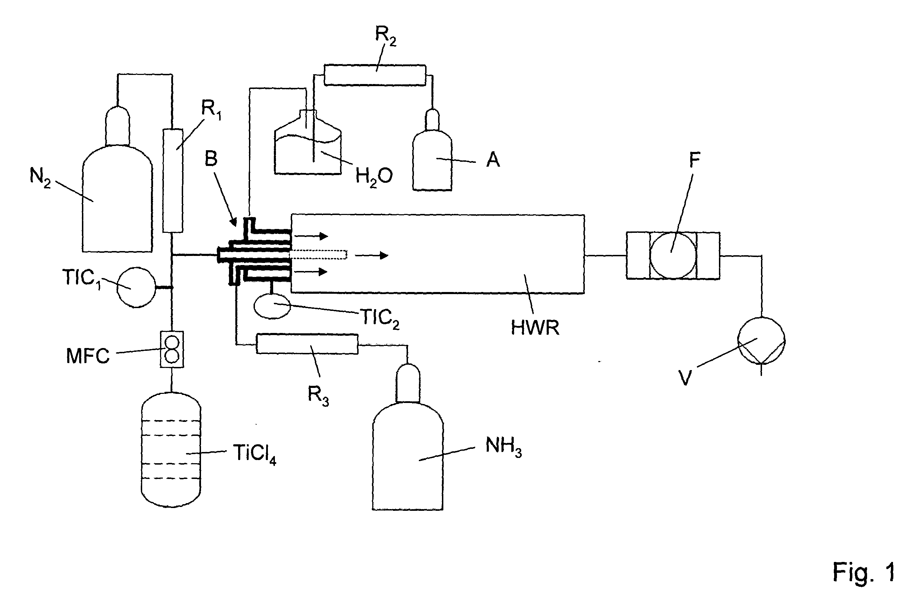

The apparatus for carrying out the single-step synthesis of N-doped TiO₂ particles shown in Fig. 1 comprises a supply system for the reactants, a hot wall reactor (HWR) wherein N-doped TiO₂ nanoparticles are formed in a controlled oxidizing/nitriding atmosphere, and a collection system for the nanoparticles exiting form the reactor.

The flow rate of the TiCl₄ precursor (1-10 g/h) is controlled by means of a mass flow controller (MFC) and the precursor is evaporated by passing it through a preheated tube equipped with a first temperature indicator/controller (TlC₁). Instead of TiCl₄ other halide precursor sources for Ti, e.g. TiF₄, TiBr₄ and Til₄ could be used. Nitrogen gas (N₂) with a flow controlled by a first rotameter (R₁) is used as carrier gas to feed the precursor source of Ti. However, dehumidified air or any other inert gas could be used as the carrier gas.

A hot water bath (H₂O) heated by a thermostatted oil bath is used to generate the water vapor, the amount of which is varied (0.48-3.12 g/h) by changing the temperature of the water in the range 40 to 90°C. A flow of pressurized air (A) controlled by a second rotameter (R₂) is used as carrier for the water vapor, but oxygen or an inert gas could be used instead.

A flow of ammonia gas (NH₃) controlled by a third rotameter (R₃) is used to form a nitriding or reducing atmosphere to induce controlled nitridation of Ti in the hot wall reactor, but any other gas that decomposes to yield atomic nitrogen species at the reactor temperature may be used instead.

The aforementioned three reactants are fed into the hot-wall reactor by means of a burner B having three concentric tubes. As seen from Fig. 1, the Ti-precursor is fed through the innermost tube, ammonia is fed through the intermediate tube and the water vapor is fed through the outermost tube. A second temperature indicator/controller (TIC₂) serves to preheat the concentric tubes through which all the reactants are fed.

The reactor wall temperature is generally set in the range from 400 to 1000°C. Preferably, the temperature is set in the range from 600 to 950°C. It will be understood that the hot-wall reactor shown here could be replaced by an equivalent high temperature source that allows continuous flow of the reactants through it.

Controlled oxidation and nitridation atmospheres maintained in the hot-wall reactor allow the Ti precursor to convert into titanium oxynitride wherein the nitrogen content varies in the range from 0.05 to 5 at % (which corresponds to x being in the range from 0.0005 to 0.05).

The gas-phase synthesis route assists in the formation of nanoparticles associated with high specific surface area, which can be in the range of 55 to 96 m²/g. The particles are collected on a filter (F) attached to the exit of the hot-wall reactor, while the process gases are taken out by the vacuum pump (V).

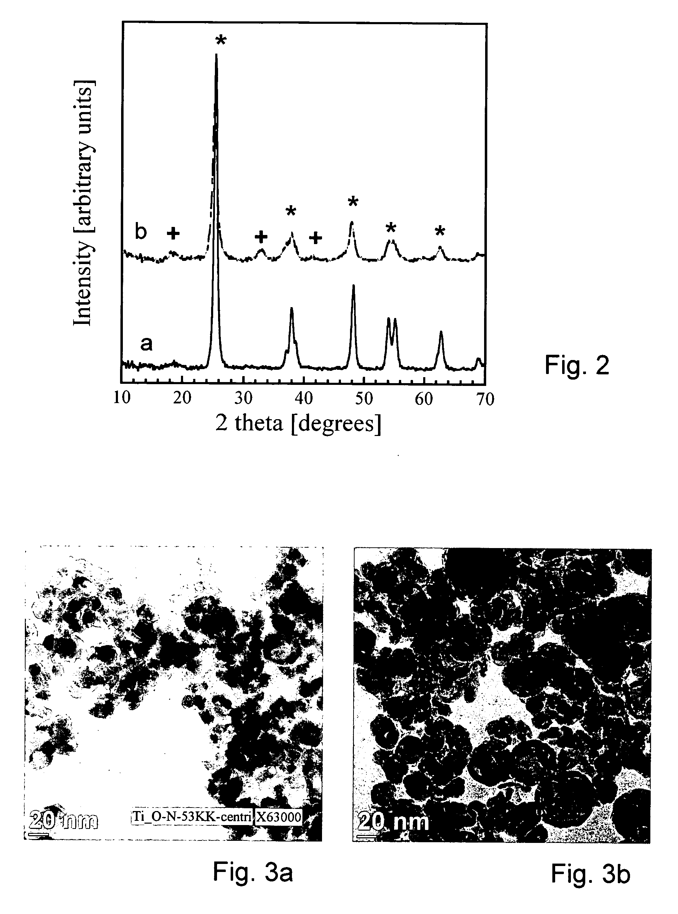

Fig. 2a shows the XRD pattern of the N-doped TiO₂ nanoparticles that constitute only anatase phase. From the view point of photocatalytic activity, anatase phase is beneficial by virtue of its suitable redox potentials. Formation of predominant anatase phase is aided by choosing the temperature of the hot-wall reactor ≤ 1000°C and increasing the relative abundance of the oxidizing component of the reaction atmosphere.

Fig. 2b shows the XRD pattern of the N-doped TiO₂ nanoparticles that constitute titanium oxynitride phase along with the anatase. A predominant nitridation component in the reaction atmosphere leads to the formation of oxynitride phase, and the resultant nanoparticles have nitrogen content > 2 at%.

By adjusting the synthesis parameters, N-doped particles having either anatase phase, a mixed phase of anatase and rutile or an amorphous phase can be produced.

Fig. 3a and 3b shows TEM images of N-doped TiO₂ nanoparticles. Fig. 3a shows homogeneous solid particles with a size ranging from 5 to 30 nm, whereas in contrast Fig. 3b shows particles with hollow morphology. The formation of particles with different morphologies depends on the relative prevalence of the oxidizing and nitriding components in the atmosphere of the hot-wall reactor.

Photocatalysis being a surface phenomenon, a small particle size increases the number of active sites where the photocatalytic reaction can take place. Hence there is a need to synthesize the visible light absorbing photocatalysts with high specific surface area. In addition hollow morphology of the particles allows the adsorption of the reactants into the open spaces that improve the efficiency of the resultant photocatalytic activity.

Calculation of the density of states of substitutional doping of anionic species has been described in US 2002/0169076 A1. Doping of nitrogen in the lattice of TiO₂ induces discrete energy levels close to the valence band by mixing with the O 2p states. This doping leads to the band gap narrowing that allows the absorption of lower energy visible light in addition to the UV irradiation.

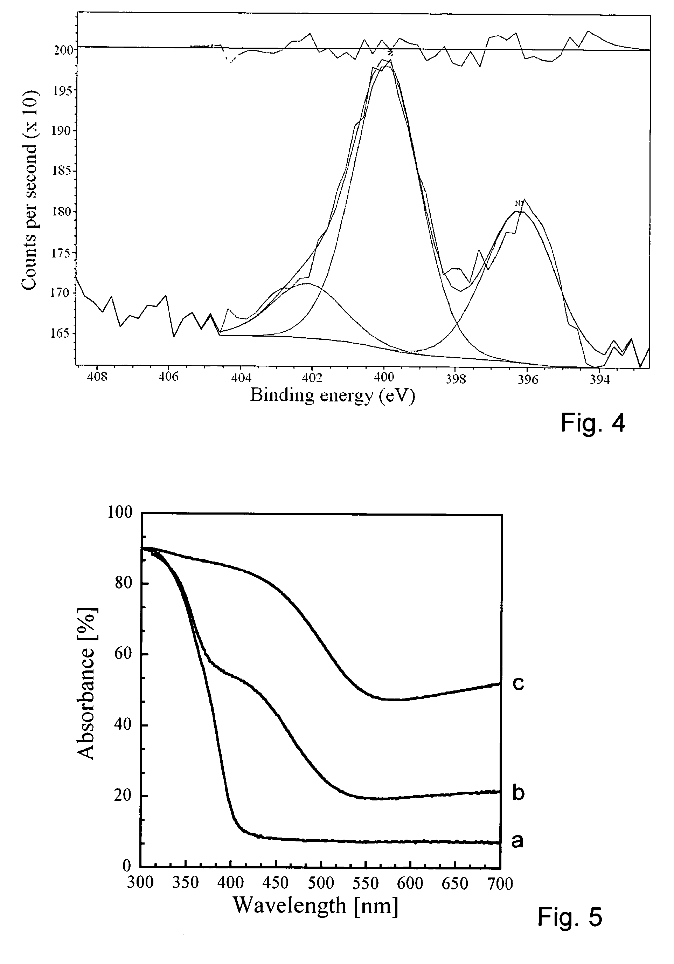

Fig. 4 shows the N 1s XPS spectrum of the N-doped TiO₂ particles. The curve fitting shows a relatively broad peak at 400.2 eV and a narrow peak at 396.5 eV.

Deconvolution of the broad peak at 400.2 eV results in the observation of another peak at 402 eV.

Confirmation of the nitrogen doping in TiO₂ is reached by the observation of the peak at the binding energy of 396.5 eV which is indicative of Ti-N-Ti or Ti-O-N bonding. Alternatively, it can also be said that there exists a chemical bond between the dopant and the metal ion.

The N 1s peaks at binding energies of 400 and 402 eV can be assigned to N-H and molecularly chemisorbed surface species of γ-N₂, respectively. The existence of these structural features is not important from the view point of visible light absorption and the concomitant photocatalytic activity.

With increasing concentration of nitrogen dopant, the intensity of the peak at 396.5 eV also increases and the relative intensity of the peaks at 400 and 402 eV decreases.

Narrowing of the band gap of N-doped TiO₂ has been studied by measuring its optical properties. Fig. 5 shows the comparison of the UV-vis absorption spectra of commercial Degussa P₂₅ TiO₂ and N-doped TiO₂ synthesized as described above.

Pure TiO₂ (Fig. 5a) has an absorption edge of 385 nm which corresponds to the band gap of 3.2 eV but virtually no absorption is seen in the visible light region. In contrast, N-doped TiO₂ (Fig. 5a and b) shows significant absorption >400 nm corresponding to the reduction of the band gap. This reduction is accompanied by the formation of the new density of states of the nitrogen atoms within the band gap that reduces the effective barrier the photogenerated electrons have to cross.

Increasing the doped nitrogen content (Fig. 5b) enhances the visible light absorption and extends the range of wavelength particles can absorb to the entire visible light spectrum.

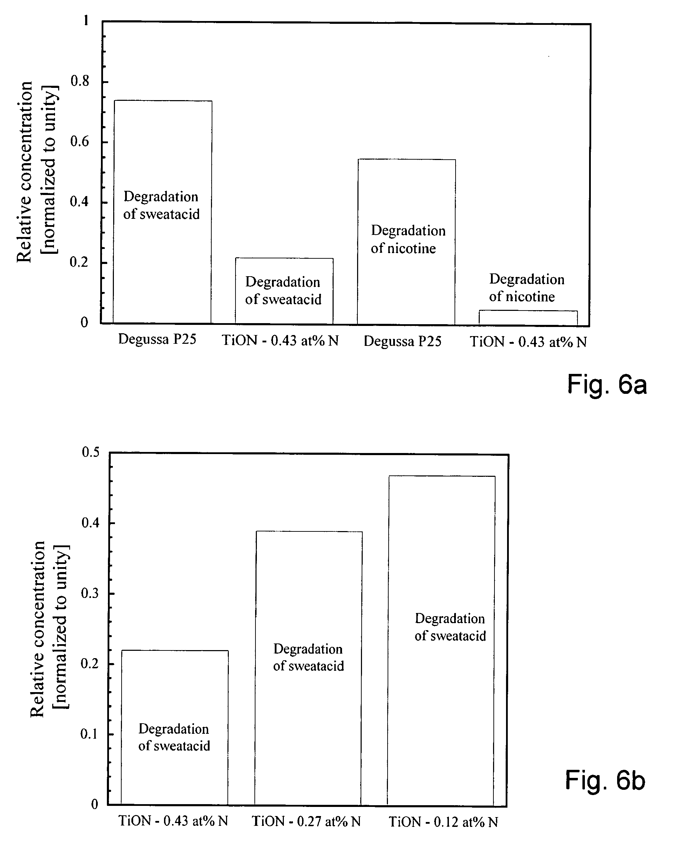

Fig. 6 shows a comparison of the photocatalytic activity of Degussa P25 pure TiO₂ and the N-doped TiO₂ under visible light irradiation. Photocatalytic activity was evaluated by the decomposition of the organic substances that gives rise to bad odor like nicotine and sweatacid. Photocatalytic decomposition of such substances would be a big advantage for the textile industries with the idea of manufacturing odor free garments.

Both pure and N-doped TiO₂ were used in the powder form to perform the activity measurements. By using medical TL20W-52 lamps (Philips lighting, Switzerland) visible light illumination having wavelength >400 nm was provided for the PCA measurements.

The kinetics of the decomposition of the reactants (nicotine and sweatacid) was evaluated by the analysis of the decomposition products using the gas chromatography technique. An irradiation time of 3 h was employed for each photocatalyst powder sample.

It can be seen from Fig. 6a that pure TiO₂ shows very little activity towards the decomposition of sweatacid and nicotine, whereas N-doped TiO₂ exhibits significant activity. This is due to the lack of photogenerated charge carriers in pure TiO₂ since visible light does not have sufficient energy to excite the wide band gap.

Fig. 6b shows the photocatalytic activity of the N-doped TiO₂ nanoparticles produced with various doped nitrogen contents. It can be seen that the increasing nitrogen content leads to an increase in the photocatalytic activity due to efficient absorption of the visible light as seen from Fig. 5b.

### Examples

The following examples show representative values of the nitrogen content, expressed in atomic %, of TiO₂₋ₓNₓ nanoparticulate powder produced under various operating conditions of the above described single-step hot wall reaction at a temperature of 650°C using TiCl₄ precursor.

**Table 2: Nitrogen content in TiO₂₋ₓNₓ as a function of N₂ and NH₃ flow rate**

| Nitrogen content (at %) | N₂ carrier gas (ml/min) | NH₃ (ml/min) | Water vapor content (g/h) | Precursor (g/h) |
|---|---|---|---|---|
| 0.20 | 2400 | 600 | 0.84 | 1.38 |
| 0.25 | 1800 | 1200 | 0.84 | 1.38 |
| 0.27 | 1200 | 1800 | 0.84 | 1.38 |
| 1.7 | 600 | 2400 | 0.84 | 1.38 |

**Table 3: Nitrogen content in TiO₂₋ₓNₓ as a function of H₂O vapor flow rate**

| Nitrogen content (at %) | N₂ carrier gas (ml/min) | NH₃ (ml/min) | Water vapor content (g/h) | Precursor (g/h) |
|---|---|---|---|---|
| 2.4 | 1800 | 1200 | 0.48 | 1.38 |
| 0.25 | 1800 | 1200 | 0.84 | 1.38 |
| 0.27 | 1800 | 1200 | 1.56 | 1.38 |
| 0.30 | 1800 | 1200 | 3.12 | 1.38 |

## Claims

1. A method for producing nitrogen doped titanium oxide nanoparticles with the formula TiO₂₋ₓNₓ, wherein x is in the range from 0.0005 to 0.05, **characterized by** reacting gaseous precursor compounds in a hot wall reaction vessel, said precursor compounds comprising a gaseous titanium compound and at least one selected from a gaseous oxygen compound and a gaseous nitrogen compound.

2. The method according to claim 1, wherein each one of said precursor compounds is fed into the reaction vessel through an associated inlet tube, each one of said inlet tubes being part of an arrangement of concentric tubes.

3. The method according to claim 1 or 2, wherein said oxygen compound is water.

4. The method according to any one of claims 1 to 3, wherein said nitrogen compound is ammonia.

5. The method according to any one of claims 1 to 4, wherein said gaseous titanium compound is a titanium halide, particularly TiCl₄.

6. The method according to any one of claims 1 to 5, wherein said reaction vessel is operated at a temperature of 400 to 1000°C, particularly 600 to 950°C.

7. Nitrogen doped titanium oxide nanoparticles with the formula TiO₂₋ₓNₓ, wherein x is in the range from 0.0005 to 0.05, **characterized in** having a specific surface area of 55 to 96 m²/g.

8. The nitrogen doped titanium oxide nanoparticles as defined in claim 7, **characterized in** comprising hollow crystallites.

9. Use of the nitrogen doped titanium oxide nanoparticles as defined in claim 7 or 8, for photocatalyzing decomposition of organic compounds or microorganisms.

10. Use of the nitrogen doped titanium oxide nanoparticles as defined in claim 7 or 8, for photocatalytic solar energy conversion.
